# EUROPEAN PATENT SPECIFICATION

(11) **EP 3 716 822 B1**
(45) Date of publication and mention of the grant of the patent: **05.01.2022**
(21) Application number: 19727518.3
(22) Date of filing: 15.05.2019
(51) Int. Cl.: A47J 31/18, A47J 31/42

(54) **AUTOMATIC COFFEE AND TEA MAKER**
AUTOMATISCHE KAFFEE- UND TEEMASCHINE
MACHINE À CAFÉ ET À THÉ AUTOMATIQUE

(30) Priority: 10.09.2018 LT 2018028
(43) Date of publication of application: 07.10.2020
(73) Proprietor: UAB "Aparata", 76352 Siauliai (LT)
(72) Inventor: KLEI MANTAS, Giedrius, 76340 iauliai (LT)
(74) Representative: Kiskis, Vaclovas
(86) International application number: PCT/IB2019/054020
(87) International publication number: WO 2020/053669

(56) References cited:
- WO-A1-2014/119414
- WO-A1-2017/029541
- WO-A2-2012/093269

## Description

### TECHNICAL FIELD

The invention is attributed to the food industry, in particular, to professional coffee and tea maker devices, which are filled with coffee beans and dry shredded tea or herbal mixtures.

### BACKGROUND

The differences between coffee and tea makers are influenced by factors such as the origin and structure of the raw material, the method of preparation, the nature of solids, etc. The tea raw material is dry, fluffy twisted leaves of varied size or tea particles already shredded to a certain size fraction. If the ground coffee is pressed during the brewing process and hot boiling water is passed through it under high pressure, such a method is not suitable for tea. The texture of the coffee grounds and tea solids is also different, the coffee grounds are a compressed briquette, and the tea solids are loose. In coffee makers, dosing is carried out together with the grinding of coffee beans; in tea makers, shredding and dosing is a very specific process that requires different techniques and equipment. The actual problem of making coffee and tea at the same making module is its cleaning, i.e. preparation for another dose of coffee or tea. Cleaning is necessary to ensure that the coffee being prepared does not contain the savour of the tea and vice versa, as well as to prevent blocking of the filters of the making module.

There is a well-known tea maker (see patent US2014157993) in which tea is prepared using a coffee maker and a tea dose per cup is a pre-packed tea pillow; it is fully prepared, with condiment, etc. Where it is undesirable for the ingredients to be mixed in the pillow, the pillow consists of several sections. The pillows are made in a circular shape for convenient placement in a coffee maker. This method is suitable for semi-automatic tea makers and is not suitable for automatic.

The closest analogue to the proposed technical solution is described in the invention WO2017029541. It offers a tea mixture dosing unit that feeds the desired amount of tea chosen on a control panel of the machine in automatic mode to the tea boiling module. This proposal was implemented in automatic coffee maker WMF 1200S of the company WMF, where a coffee making module described in the patent EP0528758 is used. The improved automatic coffee maker has become an automatic tea maker. There was a need to make further improvements so that the automatic machine could make coffee and tea at the same time.

In the present invention, it is proposed to use an automatic coffee maker for the preparation of coffee and tea, thereby making further construction improvements.

### SUMMARY OF THE INVENTION

The object of the present invention is to further improve the automatic coffee maker so that it could be used both for preparing coffee and tea in an automatic mode.

In the invention WO2017029541 herein, the author proposed the use of an automatic coffee maker for making tea. In an automatic coffee maker, one of the two coffee grinding and dosing units were adapted for dosing the tea mixtures, and the workflow of the coffee maker was changed.

The present invention offers additional steam cleaning of the making module after making of the tea, as well as the capability of dosing the tea mixtures have been extended without limits.

In order to achieve the stated objectives in the proposed automatic making machine, which includes tea dosing, coffee grinding and dosing, milk dosing and pouring in as well as condiment dispensers, tea mixtures, coffee beans, milk, containers for condiment and solids, water pressure reducer, water pump, water heater and steam generator, coffee and tea making module, coffee and tea making module drive equipped with an encoder, coffee and tea portion preparation unit, main machine control unit, control panel with display; the machine is equipped with a steam control valve which is switched between the steam generator and the branch mounted in a tube of coffee and tea portion preparation unit, and the main control unit of the machine is equipped with an additional control unit connected to the encoder of coffee and tea making module drive and steam control valve.

It is also suggested to improve the method of coffee and tea making, including grinding, dosing of coffee beans and making coffee, dosing a tea blend and making tea, dosing and pouring in condiment and milk into a coffee or tea portion using the same coffee and tea maker and the same making module, which is implemented in the proposed device so that the additional control unit would control the volume of the chamber of the making module together with the main control unit of the machine, and the volume of the chamber of the tea making module is set such that the dry tea inside the chamber would be free of mechanical compression.

It is also suggested that at the end of each tea making cycle, the making module is further cleaned with steam or the making module is cleaned with steam by shifting from the tea making to the coffee and vice versa.

### BRIEF DESCRIPTION OF THE DRAWINGS

The invention is illustrated by the drawings.
Fig. 1 shows a structural diagram of an automatic coffee and tea maker.
Fig. 2 shows the coffee and tea making module and its interaction with other machine units.

### DESCRIPTION

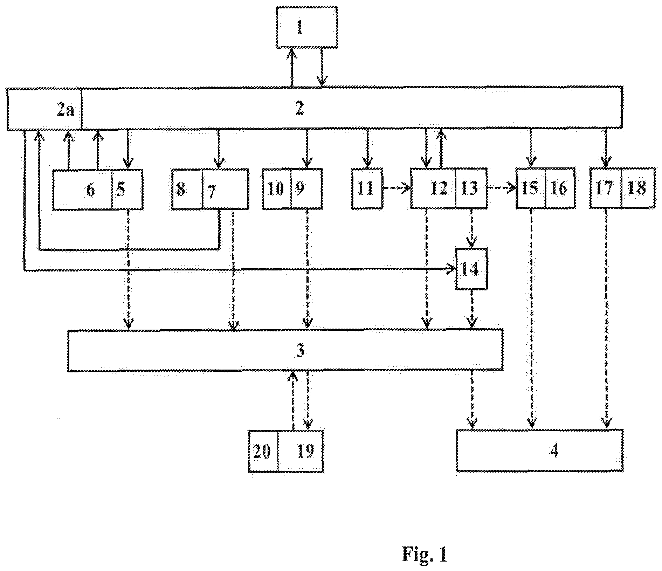

Automatic coffee and tea maker (Fig.1), where the used automatic coffee maker consists of four main units:
control panel with display 1,
main control unit 2 with additional control unit 2a,
coffee and tea making module 3,
as well as coffee and tea portion preparation unit 4, and
other operating machine units such as drive 5 with encoder 6, tea mixture dosing unit 7 with tea mixture container 8, coffee bean grinding and coffee dosing device 9 with coffee bean container 10, water pressure reducer and water pump 11, water heater 12, steam generator 13, steam control valve 14, seasoning dosing and feeding device 15 with a condiment container 16, a milk dosing and pouring in device 17 with a milk container 18, a coffee grounds and tea solids cleaning device 19 with a solids container 20.

Other operating units of the machine interact electrically, mechanically or hydraulically with the main units of the machine. Control panel with display 1 is electrically interconnected with main control unit 2. Main control unit 2 is connected (controls) with a drive 5, tea mixture dosing device 7, coffee bean grinding and coffee dosing device 9, water pressure reducer and water pump 11, water heater 12, seasoning dosing and feeding device 15, milk dispensing and dipping device 17 and has a return contact with the encoder 6 (calculates the motor revolutions of drive 5) and water heater 12 (regulates water temperature). The additional control unit 2a is electrically interconnected with an encoder 6 (calculates the motor revolutions of drive 5), tea blend dosing device 7, a drive 5, and is connected (controls) with a steam control valve 14. The drive 5 is mechanically coupled to the coffee and tea making module 3. Water heater 12 and steam generator 13 (via steam control valve 14) are hydraulically connected to coffee and tea making module 3. Coffee and tea making module 3, condiment dosing and feeding device 15, milk dosing and pouring in device 17 are hydraulically connected to coffee and tea portion preparation device 4. Tea mixture dosing device 7, coffee bean grinding and coffee dosing device 9, coffee grounds and tea solids cleaning device 19 interact with the coffee and tea making module 3.

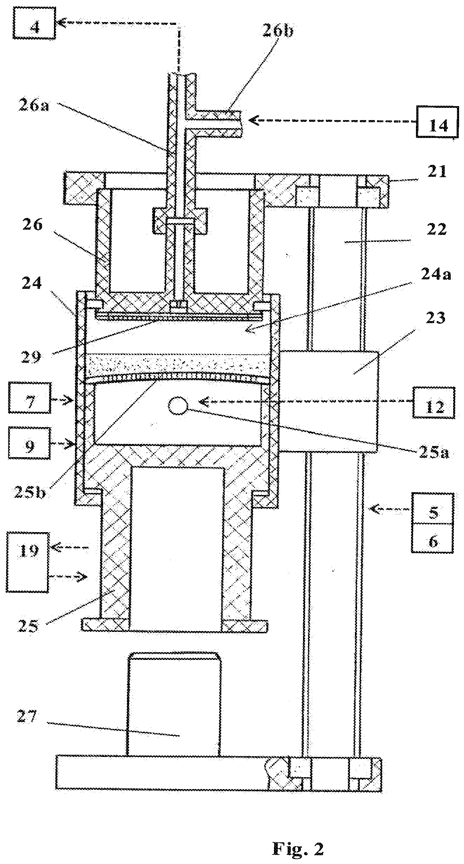

Fig. 2 shows a coffee and tea making module 3 and its interaction with other units of the machine.

The coffee and tea making module 3 consists of a housing 21, a mechanism comprising a screw 22 and a bogie (slider) 23, a cylinder 24, a movable piston 25, a fixed piston 26, and a guide 27. Cylinder 24 is attached to bogie 23. Cavity of cylinder 24 is conditionally called a coffee and tea maker chamber 24a. The piston 25 is mounted in the cylinder 24 and can move therein; in addition, and the piston 25 has a hot water supply opening 25a, through which hot water is fed from the water heater 12, and an opening 25b in the upper part thereof, through which hot water enters the chamber 24a. At the exit of the piston 26, there is a coffee and tea exit (suction) tube 26a, and in a lower part thereof, there is a net 29, through which coffee and tea are pumped out of the coffee and tea portion preparation device 4. In the tube 26a, there is a branch 26b connected to the steam control valve 14.

Since the proposed invention has been implemented in the automatic coffee maker VMF 1500S of the company VMF, the description will not cover the making of different coffee types, which can be found in the manual: http://ricmas.com/wmf/machines/manuals/1500_S_USER_MANUAL_EN.pdf The following modifications have been made in the machine VMF1500S:
- A tea mixture dosing device 7 described in the invention WO2017029541 of the author herein was used.
- Additional control unit 2a was made at control unit 2.
- Coffee and tea making module 3 was improved.
- A steam control valve 14 was installed.
- A new control panel with display 1 was made by supplementing with a tea making function.

### IMPLEMENTATION OF THE INVENTION. OPERATION

The coffee and tea maker is controlled by the control panel 1; all information is displayed on its display. The control includes the selection of coffee or tea drinks, the size of portions, and the quantity of additives (condiment and milk amount).

The coffee making process is described in the instruction: http://ricmas.com/wmf/machines/manuals/1500_S_USER_MANUAL_EN.pdf The design and operation of the tea mixture dosing device is described in the invention WO2017029541.

The operation of the machine associated with the proposed improvements will be described in more detail below.

Coffee and tea making module 3 may be in three positions:
The initial (lower) position, when the bogie 23 moves downward when the drive 5 turns the screw 22 until the movable piston 25 rests on the support of the housing 21 and the cylinder 24 rests on the lower support of the movable piston 25. In this case, the upper edge of the cylinder 24 is aligned with the upper surface of the movable piston 25. Then, the coffee grounds and tea solids striking mechanism 19, which brushes away the grounds on the surface of the movable piston 25 into the container 20 is further activated.

The filling position (position of the filling the making chamber 24a with a dose of coffee powder or tea blend) when the movable piston 25 rests on the support of the housing 21 and the cylinder 24 rises up to the upper support of the movable piston 25.

Making position (coffee and tea making position) when a cylinder 24 with a movable piston 25 is raised upward, and a fixed piston 26 has entered cylinder 24 to:
Full compression of coffee powder dose in the making chamber 24a between the movable 25 and fixed piston 26.

Closing the tea mixture dose in the making chamber 24a without compression. The volume of the making chamber 24a is set by the additional control unit 2a.
The readings of encoder 6 are taken in the initial position of the coffee and tea making module 3, which is the reference point. Further, when the coffee and tea making module 3 moves upward from the initial position, the main control unit 2 and the additional control unit 2a calculate the pulses of the encoder 6 and stop the drive 5 at the right moment.

### METHOD OF MAKING TEA

The making module 3 is in the filling position. The desired tea dose requirements are set on the control panel 1. According to the command from the control panel 1, the main control unit 2 starts a tea dosing device 7, which pours the desired amount of tea mixture into the making chamber 24a. The main control unit 2 activates the drive 5, which shifts the making module 3 to the making position.

As mentioned earlier, stopping of the drive 5, when making tea, is controlled by an additional control unit 2a. According to the setting in the control panel 1, it stops the operation of the drive 5 so that the amount of tea in the making chamber 24a between the pistons 25 and 26 would not be compressed.

The main control unit 2 activates the supply of hot water from the water heater 12 (through the piston 25 and through the openings 25b) to the making chamber 24a. The coffee and tea portion preparation device 4 is activated, which, through the net 29 and the coffee and tea exit tube 26a, pumps out the tea into the cup. At the end of the making cycle, the main control unit 2 starts the drive 5, and the making module 3 starts to return to its initial position, while the additional control unit 2a activates the steam control valve 14, which feeds a steam portion through the exit pipe 26a and its branch 26b and through the net 29 to the making chamber 24a. This action cleans the holes in the net 29 and cleans the tea particles adhered to it during suction.

After the making module 3 has returned to initial position, the coffee grounds and tea solids cleaning device 19 is activated, which brushes away the tea solids from the surface of the movable piston 25 with the openings 25b into the container 20. The making module 3 is returned to the filling position. Steam cleaning options for making module 3 are possible. Steam cleaning is done after making each portion of tea. Steam cleaning is done after making each tea or coffee portion.

When supplementing the control unit with an additional control unit 2a through the introduction of the steam cleaning of the making chamber 24a and the net 29, in particular, a fixed piston 26, the following can be performed:
Making tea. Continuously, without additional cleaning of making module 3.

Freely change the preparation of coffee and tea, knowing that tea or coffee will not contain the impurities of the previously produced drink.

Service conditions improve: You do not need to clean the making module 3 so often.

The proposed technical solutions can be used in coffee makers that have a modified coffee making module used in machines of WMF or other companies.

## Claims

1. An automatic coffee and tea maker, comprising:
tea leaves dosing (7), coffee grinding and dosing (9), milk dosing and pouring in (17), condiment dosing (15) devices,
tea mixture (8), coffee beans (10), milk (18), condiment (16) and grounds/solids (20) containers,
water pressure reducer and water pump (11), water heater (12) and steam generator (13),
coffee and tea making module (3),
coffee and tea making module drive (5) equipped with an encoder (6),
a coffee and tea portion preparation device (4),
main control unit (2),
display with control panel (1) **characterized in that** the automatic coffee and tea maker has a steam control valve (14) connected between the steam generator (13) and the branch (26b) of the suction tube (26a) built in the coffee and tea portion preparation device (4), the main control unit (2) is equipped with an additional control unit (2a) interconnected with the encoder (6) of the drive (5) of the coffee and tea making module (3) and the steam control valve (14).

2. Coffee and tea making method, including coffee bean grinding, dosing and coffee making, dosing of tea leaves mixture and tea making thereof, dosing and pouring in condiment and milk into coffee and tea portion using the same coffee and tea maker and the same making module according to claim 1 herein **characterized in that** the additional control unit (2a), together with the main control unit (2) of the machine, controls the size (volume) of the chamber (24a) of the making module (3) and when making the tea and/or by switching from making coffee to tea or vice versa; the making module (3) is cleaned by steam.

3. A method according to claim 2 **characterized in that** the volume of the chamber (24a) of the tea making module (3) is set so that the dry tea leaves dose inside the chamber (24a) would be free of mechanical compression.

4. A method according to claim 2 **characterized in that** the making module (3) is steam cleaned after each portion of coffee or tea.

## Patentansprüche

1. Ein automatischer Kaffee- und Teekocher, umfassend:
Vorrichtungen zur Dosierung von Teeblättern (7), zum Dosieren und Mahlen von Kaffee (9), zum Dosieren und Einschenken von Milch (17), zum Dosieren von Gewürzen (15),
Behälter für Teemischung (8), Kaffeebohnen (10), Milch (18), Gewürze (16) und Kaffeesatz/Feststoffe (20),
ein Reduzierstück für den Wasserdruck und eine Wasserpumpe (11), Wassererhitzer (12) und Dampfgenerator (13),
Modul zum Kaffee- und Teekochen (3),
Antrieb für das Modul zum Kaffee- und Teekochen (5), ausgestattet mit einem Encoder (6),
ein Vorbereitungsgerät für die Kaffee- und Teeportionierung (4),
eine Hauptsteuereinheit (2),
ein Bildschirm mit Bedienfeld (1) **dadurch gekennzeichnet, dass** der automatische Kaffee-und Teekocher ein Dampfkontrollventil (14), das zwischen dem Dampfgenerator (13) und dem Zweig (26b) des im Vorbereitungsgerät für die Kaffee- und Teeportionierung (4) eingebauten Saugrohrs (26a) verbunden ist, wobei die Hauptsteuereinheit (2) mit einer zusätzlichen Steuereinheit (2a) ausgestattet ist, die mit dem Encoder (6) des Antriebs (5) des Kaffee- und Teekochmoduls (3) und dem Dampfkontrollventil (14) verbunden ist.

2. Eine Methode zum Kaffee- und Teekochen, einschließlich dem Mahlen von Kaffeebohnen, der Dosierung und dem Kochen von Kaffee, der Dosierung der Teeblattmischung und dem Kochen von Tee, der Dosierung und dem Einschenken von Gewürzen und Milch in die Kaffee- oder Teeportion unter Verwendung des gleichen Kaffee- und Teekochers und des gleichen Herstellungsmoduls
gemäß dem hier beschriebenen Anspruch 1, **dadurch gekennzeichnet, dass** die zusätzliche Steuereinheit (2a) gemeinsam mit der Hauptsteuereinheit (2) der Maschine die Größe (das Volumen) der Kammer (24a) des Kochmoduls (3) kontrolliert und dass das Kochmodul (3) beim Kochen von Tee und/oder beim Wechsel vom Kaffeekochen zum Teekochen oder umgekehrt durch Dampf gereinigt wird.

3. Eine Methode gemäß Anspruch 2, **dadurch gekennzeichnet, dass** das Volumen der Kammer (24a) des Teekochmoduls (3) so eingestellt wird, dass die trockenen Teeblätter im Inneren der Kammer (24a) frei von mechanischer Kompression sind.

4. Ein Methode gemäß Anspruch 2, **dadurch gekennzeichnet, dass** das Kochmodul (3) nach jeder Kaffee- oder Teeportion mit Dampf gereinigt wird.

## Revendications

1. Une machine automatique à café et à thé, comprenant :
des dispositifs de dosage des feuilles de thé (7), de mouture et de dosage du café (9), de dosage et de versement du lait (17), de dosage des condiments (15),
des réceptacles pour le mélange de thé (8), les grains de café (10), le lait (18), les condiments (16) et les marcs/solides (20), un dispositif de réduction de la pression de l'eau et une pompe à eau (11), un dispositif de chauffage de l'eau (12) et un générateur de vapeur (13), un module de préparation de café et de thé (3),
un entraînement (5) du module de préparation du café et du thé équipé d'un codeur (6),
un dispositif de préparation de portions de café et de thé (4),
une unité de commande principale (2),
un écran avec panneau de commande (1) **caractérisé en ce que** la machine de préparation de thé et
de café automatique dispose d'une vanne de régulation de vapeur (14) connectée entre le générateur de vapeur (13) et la branche (26 b) du tube d'aspiration (26a)
construit dans le dispositif de préparation de portions de café et de thé (4), l'unité de commande principale (2) est équipée d'une unité de commande supplémentaire (2a) interconnectée avec l'encodeur (6) de l'entraînement (5) du module de préparation de café et de thé (3) et la vanne de régulation de vapeur (14).

2. Procédé de préparation de café et de thé, comprenant la mouture de grains de café, le dosage et la préparation de café, le dosage d'un mélange de feuilles de thé et la préparation de thé, le dosage et le versement de condiments et de lait dans une portion de café et de thé en utilisant la même machine à café et à thé et le même module de préparation selon la revendication 1, **caractérisé en ce que** l'unité de commande supplémentaire (2a), conjointement avec l'unité de commande principale (2) de la machine, commande la taille (volume) de la chambre (24a) du module de préparation (3) et lors de la préparation du thé et/ou en passant de la préparation de café à celle de thé ou vice versa ; le module de préparation (3) est nettoyé à la vapeur.

3. Procédé selon la revendication 2, **caractérisé en ce que** le volume de la chambre (24a) du module de fabrication de thé (3) est réglé de telle sorte que la dose de feuilles de thé sèches à l'intérieur de la chambre (24a) soit exempte de compression mécanique.

4. Procédé selon la revendication 2, **caractérisé en ce que** le module de fabrication (3) est nettoyé à la vapeur après chaque portion de café ou de thé
